Europäisches Patentamt

(19) European Patent Office

Office européen des brevets

(11) Numéro de publication: **0 043 745**
**B1**

(12) **FASCICULE DE BREVET EUROPEEN**

(45) Date de publication du fascicule du brevet:
11.09.85

(51) Int. Cl.⁴: **G 06 F 9/28,** G 06 F 15/336,
G 06 F 15/20

(21) Numéro de dépôt: 81400918.9

(22) Date de dépôt: **10.06.81**

(54) Système de traitement et de mémorisation de données numériques, notamment pour tomodensitomètre.

(30) Priorité: **04.07.80 FR 8014909**

(43) Date de publication de la demande:
**13.01.82 Bulletin 82/2**

(45) Mention de la délivrance du brevet:
**11.09.85 Bulletin 85/37**

(84) Etats contractants désignés:
**DE GB NL**

(56) Documents cités:
**FR - A - 2 379 117
FR - A - 2 423 823
GB - A - 2 001 502
US - A - 3 924 129
US - A - 3 975 714**

**ELECTRO CONFERENCE RECORD, vol. 4, no. 8/5, 24-26 avril 1979 Los Angeles, US KARWOSKI: "Architecture development for a general purpose digital filter", pages 1-16**

(73) Titulaire: **THOMSON-CSF, 173, Boulevard Haussmann, F-75379 Paris Cedex 08 (FR)**

(72) Inventeur: **Grimbert, Martine, THOMSON-CSF SCPI 173, bld Haussmann, F-75360 Paris Cedex 08 (FR)**
Inventeur: **Berard, Alain, THOMSON-CSF SCPI 173, bld Haussmann, F-75360 Paris Cedex 08 (FR)**

(74) Mandataire: **Grynwald, Albert et al, THOMSON-CSF SCPI 173, Bld Haussmann, F-75379 Paris Cedex 08 (FR)**

## Description

La présente invention concerne un système de traitement et de mémorisation de données numériques, notamment pour tomodensitomètre.

Dans l'art antérieur, il est connu des ensembles de traitement de données numériques mises sous forme d'éléments binaires. Ces ensembles, regroupés sous le vocable d'ordinateur, peuvent comporter des mémoires. Suivant le degré de spécialisation, ces ensembles peuvent aussi être désignés par le terme processeur de donnés numériques et comporter aussi des circuits de mémorisation ou mémoires. La présente invention se rapporte plus précisément aux processeurs de données numériques spécialisés dans les traitements de masses considérables de données. Par exemple, elle s'applique aux processeurs de traitement de données radiologiques pour la reconstruction d'images tomodensitométriques. Elle s'applique aussi aux traitements d'une multitude de données comme l'analyse spectrale ou les processus de traitement de données en temps réel.

Dans les domaines cités, l'art antérieur comprend de nombreuses descriptions de systèmes de traitement. La présente invention apporte une solution nouvelle à la question d'optimisation des chronogrammes en particulier dans le traitement des données en temps réel.

Des solutions de traitement de données numériques étaient déjà connues par une révélation de M. R. J. Karwoski à Electro Conférence Record les 24 à 26 Avril 1979 à Los Angelès, ainsi que par la demande de brevet français n° 79 09883, publiée sons le numéro 2 423 823. Ces solutions préconisaient l'utilisation d'opérateurs logiques décentralisés de l'unité centrale pour rendre possible le travail en temps réel. Ces solutions rencontrent cependant des limites quand les opérateurs utilisés ne sont pas suffisamment rapides.

La présente invention apporte une nouvelle architecture des processeurs particulièrement avantageuse pour la reconstruction des images tomodensitométriques.

En effet, selon la présente invention, un système de traitement et de mémorisation de données tomodensitométriques comprend:

— une unité centrale pour recevoir des données depuis un organe d'entrée par le canal d'une première ligne de service, pour entreprendre avec ces données dans une unité arithmétique et logique un calcul de reconstruction d'image tomodensitométrique sous le contrôle d'un premier séquenceur de microprogramme et pour délivrer des résultats successifs,

— une mémoire pour recevoir ces résultats par le canal d'une deuxième ligne de service,

— cette mémoire comportant un opérateur supplémentaire décentralisé de l'unité centrale pour achever, sous le cntrôle d'un deuxième séquenceur de microprogramme le calcul de reconstruction d'image de manière à diminuer pour l'unité centrale le nombre d'opérations lecture/écriture en mémoire,

— ledit deuxième séquenceur de microprogramme étant initialisé par l'unité centrale et travaillant ensuite au rythme de l'arrivée des résultats successifs,

— ledit opérateur décentralisé étant un additionneur pour exécuter une accumulation dans la mémoire desdits résultats successifs, caractérisé en ce que la mémoire comporte une pluralité de pages associées chacune à un opérateur décentralisé pour mener à bien un calcul de reconstruction d'image en entrelacement des résultats successifs, le mode d'adressage des cases mémoires s'effectuant, sous le contrôle du deuxième séquenceur de microprogramme, d'une case mémoire d'une page à une case mémoire d'une page suivante.

L'invention sera mieux comprise à l'aide de la description et les figures annexées qui sont:

la figure 1: un élément constitutif d'un système de l'art antérieur mis également en oeuvre dans l'invention;

la figure 2: un élément constitutif dans une fonfiguration particulière,

la figure 3: une configuration d'ordinateur selon l'art connu,

la figure 4: une configuration d'ordinateur selon l'art connu,

la figure 5: une variante selon l'invention,

la figure 6: un chronogramme du fonctionnement de la variante de la figure 5.

Un traitement par processeur de données numériques consiste à appliquer des ensembles de données à un organe de traitement. Celui-ci peut comporter un certain nombre de composants, dits opérateurs, qui réalisent les opérations élémentaires du traitement. Un opérateur comporte des entrées E1, E2, ... EN en nombre N, au moins une sortie S et une commande C. Il réalise une opération f définie par la relation $R = f(A1, ..., AN, C)$ où A1, ..., AN sont des données présentées aux entrées E1, ..., EN et R un résultat présent à la sortie S après l'application de la commande C. Les résultats, au cours et à la fin du traitement, sont envoyés à un dispositif de mémorisation, soit provisoire comme un registre en cours de traitement, soit permanent comme une mémoire de masse en vue d'un traitement ultérieur. Dans ce cas, ce pourrait être, par exemple, un dispositif de visualisation.

Les blocs qui vont être maintenant décrits, renvoient simultanément aux organes correspondants, donc à des entités physiques d'une part, et aux fonctions qu'elles tendent à réaliser d'autre part.

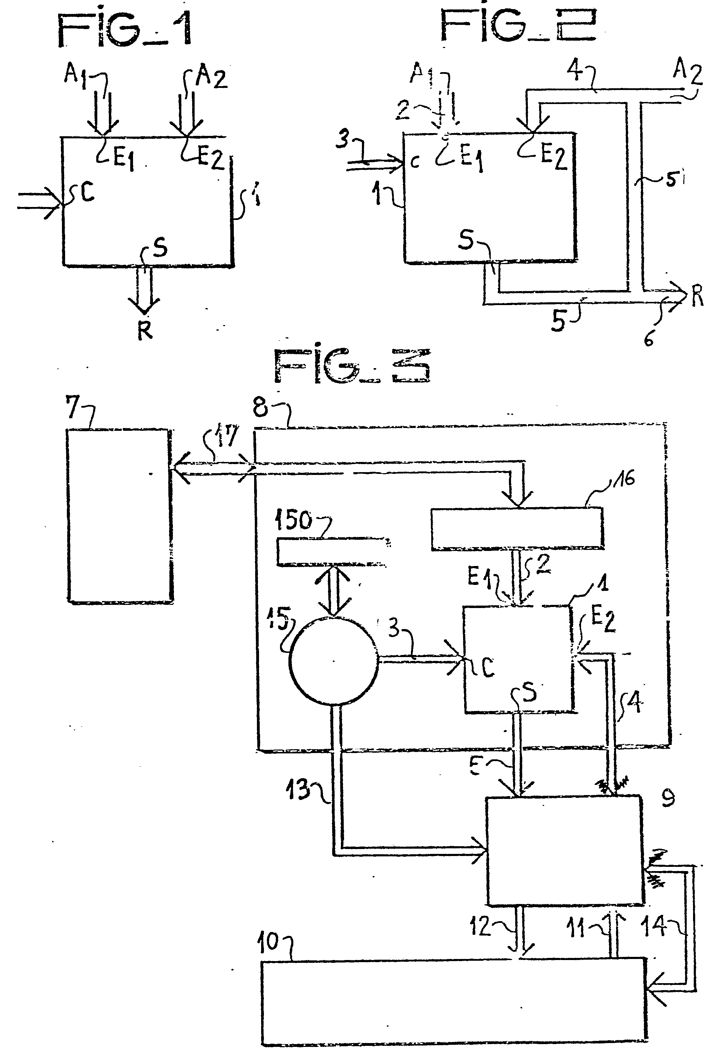

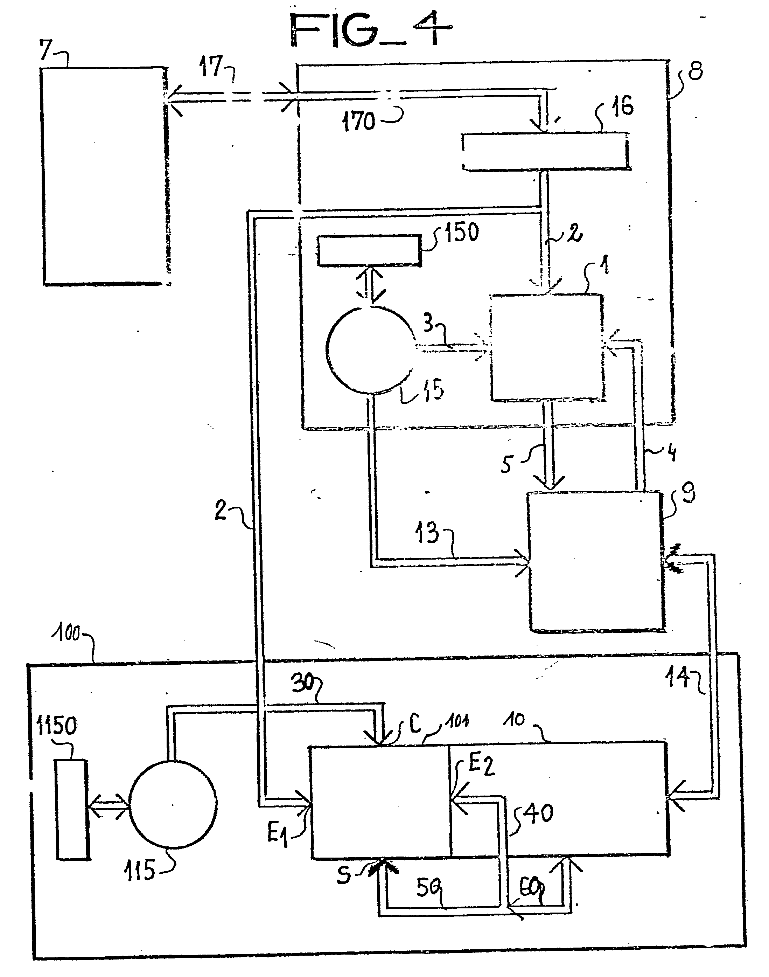

A la figure 1, on a représenté un opérateur à deux données qui réalise:

$$R = f(A1, A2, C)$$

L'opérateur 1 comporte les deux entrées E1 et E2, la sortie S et la commande C. Les données A1 et A2 sont présentés aux entrées correspondantes. A la commande C, le résultat R apparaît à la sortie S. Les données A1 et A2 peuvent être par exemple des suites de mots $a_1, a_2, \ldots a_p$ pour A1, et $b_1, b_2, \ldots b_p$ pour A2. A chaque commande C, après chaque présentation, l'étape j du traitement f correspondra à l'exécution de la relation

$$r_j = f(C, a_j, b_j)$$

où $r_j$ sera le $j^{ième}$ résultat R obtenu sur la sortie S. Le type d'opérateur considéré peut être à structure programmable. Le mot de commande C est alors constitué par une suite série ou parallèle de micro-instructions émise par exemple par un dispositif central comme une Unité Arithmétique et Logique (UAL).

Par ailleurs dans une application particulière, si le traitement comporte q opérateurs qui réalisent les opérations $f_1, f_2, \ldots f_q$, l'opérateur numéro k pourra recevoir comme entrées le résultat R de l'opérateur numéro k−1, qui le précède et au moins une autre donnée. Dans la suite de la description, pour des raisons de clarté d'expression, on se limite à un traitement avec un seul opérateur.


### 1. pour réaliser une opération f

Un type de traitement particulier est le traitement répétitif. Un tel traitement de données consiste à répéter au moins une des opérations du traitement un nombre prédéterminé de fois. Ainsi, une suite de données est fournie à l'opérateur qui procède à un traitement répétitif en réintroduisant en entrée, certains au moins, des résultats intermédiaires. Plus particulièrement, parmi les traitements répétitifs, quand il faut combiner les résultats immédiatement précédents à la ou les données d'entrée, le traitement est dit récursif. Il s'agit alors de réaliser les relations suivantes:

$$b_j = r_{j-1}$$
$$r_j = f(a_j, b_j, C)$$

Pour réaliser ce traitement, à la figure 2 on a représenté un opérateur 1 avec ses entrées E1, E2, la commande C et la sortie S. Il comporte aussi des lignes de service 2, 3 et 4, la ligne 2 amenant la donnée A1, la ligne 3 la commande C et la ligne 4 la donnée A2. On remarque que la ligne 4 est reliée par une dérivation 5 à la sortie S.

Quand on initialise le traitement, on amène premier mot $a_1$ de la donnée A1 et un premier mot $b_1$ de la donnée A2, aux entrées E1 et E2 par les lignes 2 et 4. A l'application de la commande C sur la ligne 3, on fait apparaître au temps de transit près, le résultat $r_1$, premier résultat R sur la ligne 5. On a réalisé:

$$r_1 = f(a_1, b_1, C)$$

La boucle formée par les lignes 4 et 5 indique que la donnée présente à l'entrée E2 est désormais $r_1$. Le second pas, ou seconde étape du traitement réalise donc bien l'opération:

$$r_2 = f(a_2, b_2, C) \text{ où}$$
$$b_2 = r_1$$

Au $p^{ième}$ et dernier pas du traitement répétitif on obtient:

$$r_p = f(a_p, b_p, C) \text{ où}$$
$$b_p = r_{p-1}$$

La boucle formée par les lignes 4 et 5 comporte une sortie 6 qui pemet de disposer du résultat du traitement répétitif $r_p$. On a ainsi réalisé le traitement du mot $b_1$ de la donnée $A_2$ par p mots de la donnée $A_1$, qui sont $a_1, a_2, \ldots a_p$ et le résultat final est $r_p$ disponible à la ligne de sortie 6.

Dans l'art antérieur, de tels traitements sont connus. Mais dans la configuration décrite, on remarquera que la disposition des processeurs classiques est peu avantageuse. En effet, à la figure 3 on a représenté schématiquement un système de traitement et de mémorisation selon l'art connu.

Le processeur de données de la figure 3 comporte une unité centrale 8 reliée par une ligne de service 17 à un organe d'entrées-sorties 7. L'unité centrale 8 comporte un opérateur 1 qui reçoit des mots de données d'une part d'un registre 16 par une ligne de service 2 et d'autre part d'une mémoire 10 à travers un organe de contrôle 9 et par des lignes de service 11 et 4.

La commande C et la commande de l'organe de contrôle 9 sont engendrées par une zone 15 de l'unité centrale 8 respectivement reliées à cette zone par des lignes de service 3 et 13.

3

Le séquencement des diverses opérations effectuées par l'opérateur 1 est réalisé par le déroulement d'un programme préalablement enregistré dans une mémoire 150, du type PROM par exemple, destinée, sous commande d'un organe particulier non représenté du processeur, à réaliser avec la zone 15 un séquenceur de microprogramme. Le travail réalisé par le processeur est le suivant. On désire réaliser le traitement:

R = f (A1, A2, C)

par l'opérateur 1. Pour cela la zone 15 engendre d'abord un ordre de contrôle qui transite par la ligne 13 jusqu'à l'organe de contrôle 9. Cet ordre, décodé, va engendrer une adresse, transmise par une ligne 14 à la mémoire 10. De plus, il va indiquer à la mémoire l'ordre de lecture. Le mot de données qui correspond à la donnée A2, remonte alors par la ligne de service 11 à l'organe de contrôle où il subit une remise en forme. Puis par la ligne 4, il est présenté à l'entrée E2.

Dans le même temps, l'unité centrale 8 transmet par la ligne 2, le mot de la donnée A1 du registre 16 à l'entrée E1.

La zone 15 émet alors la commande C de traitement sur la ligne 3. L'opérateur 1 effectue l'opération f et le résulat R apparaît à la sortie S sur la ligne 5. Il est transmis à l'organe de contrôle 9 pendant que la zone 15 émet un ordre de contrôle pour engendrer une adresse où l'on va écrire le mot résultat R. La zone 15 émet aussi l'ordre d'écriture et le résultat R préalablement remis en forme dans l'organe de contrôle 9, est mis en mémoire dans la mémoire 10 par la ligne 12. Pour un traitement récursif à p pas le cycle doit être réalisé p fois ce qui peut inerdire le traitement en temps réel.

Il est possible de disposer plusieurs unités de calcul, identique à celle décrite ci-dessus. On trouvera par exemple une telle disposition dans le brevet des Etats Unis d'Amérique de Gordon publié sous le numéro 4 135 247. L'augmentation u nombre des données à traiter en temps réel rend inopérant un tel dispositif. En particulier, toutes les opérations composant le traitement n'ayant pas la même durée, on doit constituer des organes tampons pour transmettre les données.

Le système de traitement et de mémorisation présenté à la figure 4 dans une configuration de traitement récursif, permet de remédier à cet inconvénient majeur. Il comporte un opérateur cupplémentaire 101, décentralisé de l'unité centrale 8. Cette configuration permet d'éviter le va-et-vient des données issues de la mémoire 10 à travers l'organe de cntrôle 9 et en particulier d'obtenir un gain de temps appréciable.

Le système selon l'invention comporte les mêmes ensembles 7, 8, 9 et 10 des processeurs de données classiques. L'opérateur 101 est en relation directe avec la mémoire 10.

La mémoire 10 est associée alors à un ensemble zone 115 — mémoire 1150 qui est analogue à l'ensemble zone 15 — mémoire 150 de l'unité centrale 8 et joue le même rôle pour l'opérateur 101. Ce dernier ensemble (15, 150) de l'unité centrale 8 permet de programmer d'autres traitements par exemple sur l'opérateur 1 précédemment décrit qui appartient à l'unité centrale 8. La réunion de l'ensemble (115, 1150), de l'opérateur 101, de la mémoire 10 et de leurs lignes de service constitue une mémoire intelligente 100. Cette dernière comporte seulement deux accès conversationnels avec le reste du processeur. Il s'agit de la ligne 2 d'enrée des données à traiter et à mémoriser par la mémoire intelligente 100 et de la ligne 14 qui sert en particulier à initialiser la mémoire 10. Cette ligne 14 peut d'ailleurs être supprimée quand toutes les valeurs sont initialisées par des commandes internes de la mémoire 10 qui sont RAZ ou RAU (CLEAR ou PRESET dans la littérature anglo-saxonne). L'unité centrale 8 doit seulement lancer l'ordre de début de traitement. La mémoire intelligente 100 peut alors fonctionner d'une manière autonome, libérant l'unité centrale 8 que l'on peut alors affecter à des tâches plus complexes. Cet ordre de départ traitement ainsi que le séquencement de l'ensemble (115, 1150) peuvent être décodés à partir du flux des données sur la ligne 2.

Dans le cas particulier de la reconstruction d'image tomodensitométrique, l'organe d'entrée sortie 7 est un système d'acquisition de données radiologiques h. L'ensemble des données radiologiques est l'échantillonnage d'une fonction h défini par:

$$h\,(x, y; z) = \int_T f(s)ds$$

L'intégrale est prise sur un trajet T pris parmi un ensemble et f est la fonction de densité radiologique ponctuelle en un point de ce trajet.

La méthode de convolution dont on trouvera des développements dans l'article de Ramachandran: »Three-dimensional reconstruction from radiographs and Electron micrographs«, in Proc. Nat. Acad. Sci. USA Vol 68, n° 9, p2236—2240, sept. 1974, fournit deux relations qui sont:

$$g\,(nb, \Theta) = \frac{1}{4\,b}\,h\,(nb, \Theta) - \frac{1}{b^2}\,\sum_{p\ impair}\frac{h\,[(n+p)\,b, \Theta]}{p^2} \qquad (1)$$

et

$$f\,(jb, k\,\varphi_0) = \sum_{t=1}^{P}\,g\,[jb\cos(k\,\varphi_0 - t\,\Theta_0), t\,\Theta_0] \qquad (2)$$

4

Ces deux relations de base sont calculées directement à partir des données radiologiques h fournies par le système d'acquisition de données 7. Les termes b, $\varphi_0$ et $\Theta_0$ sont définis par la méthode de convolution elle-même. C'est plus particulièrement pour réaliser le traitement (2) que l'invention est avantageuse. Dans le registre 16, on dispose des p nombres g [jb cos (k $\varphi_0 - t\Theta_0$), t $\Theta_0$] avec t variant de 1 à p. Ces p nombres constituent la suite $a_1, a_2, \ldots a_p$ des mots de la donnée A1. Dans la mémoire 10, on s'assure qu'à une adresse ADR en relation avec les coordonnées polaires (jb, k$\varphi_0$), on a un mot de donnée initial $b_1$ identique à 0:

$$b_1 = 0$$

On peut alors réaliser le traitement répétitif qui consiste à faire une accumulation de données. L'opérateur 101 est un additionneur (ou soustracteur) selon la commande C.

La zone 115 adresse alors ADR, la position de la mémoire 10 concernée par l'intermédiaire de la ligne 30. La première donnée $a_1$ qui est ici:

$$a_1 = g \text{ [jb cos (k } \varphi_0 - \Theta_0), \Theta_0]}$$

est présentée à l'entrée E1 de l'opérateur 101. A l'entrée E2 de cet opérateur on présente par l'intermédaire des lignes 60 et 40 la première valeur de la donnée A2 qui est ici:

$$b_1 = 0$$

Le premier pas du traitement est:

$$r_1 = a_1 + b_1$$

soit:

$$r_1 = g \text{ [jb cos (k } \varphi_0 - \Theta_0), \Theta_0]}$$

On réalise alors

$$b_2 = r_1$$

en présentant $r_1$ à l'entrée E2. Le registre 16 fournit ensuite le second mot de la donnée A1 qui est:

$$a_2 = g \text{ [jb cos (k } \varphi_0 - 2 \Theta_0), 2 \Theta_0]}$$

et à la commande C, on obtient:

$$r_2 = g \text{ [jb cos (k } \varphi_0 - \Theta_0), \Theta_0] + g \text{ [jb cos (k}\varphi_0 - 2 \Theta_0), 2 \Theta_0]}$$

Pour le pas suivant, on réalise:

$$b_3 = r_2$$

et on répète l'opération jusqu'à équisement des données A1. On a alors;

$$r_p = \sum_{t=1}^{p} g \text{ [jb cos (k}\varphi_0 - t \Theta_0), t \Theta_0]}.$$

Le résultat final, $r_p$, est alors adressé par les lignes 50 et 60 à la position de la mémoire 10 qui est ADR. Cette adresse est en relation avec la position géométrique (jb, $k_0 r_p$) qui représente alors la valeur calculée de f (jb, $k_0 r_p$). Cette valeur constitue, d'une part la densité d'absorbtion au point (jb, $k_0 r_p$) dans la coupe de corps dans le plan z, d'autre part la brillance ou luminosité du point de l'écran de visualisation de l'image tomodensitométrique, point appelé pixel dans la littérature anglo-saxonne.

L'algorithme indiqué ici est un algorithme de tomodensitométrie pour faisceaux parallèles. Dans une répartition de faisceaux à éventuell, (le fan-beam de la littérature anglo-saconne) il est nécessaire de procéder à un changement de variables et de domaines d'intégrations. Le calcul final de reconstruction d'image n'est pas réellement modifié.

L'invention convient particulièrement aux traitement de données en grand nombre. Elle est particulièrement adaptée pour le traitement de données en temps réel.

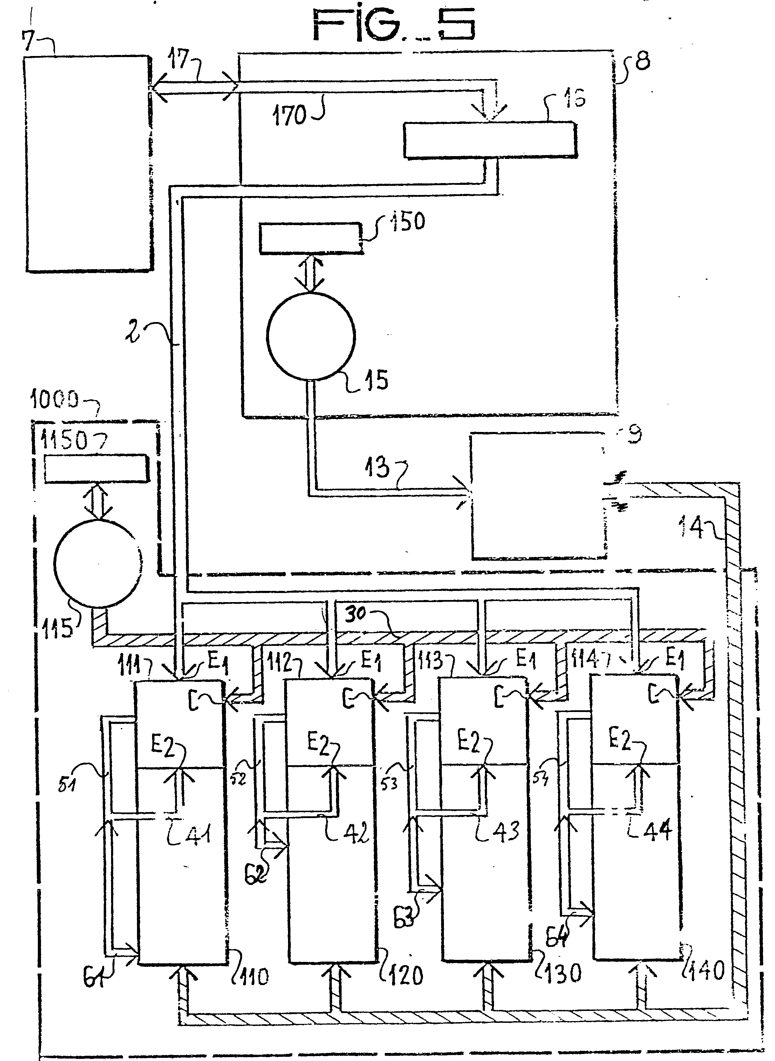

L'invention permet de réaliser un travail de mémoire en entrelaçage. A la figure 5, on a représenté schématiquement un travail sur 4 pages mémoires. La mémoire 10 non figurée comprend en fait, 4 pages mémoires 110, 120, 130 et 140. A chaque page correspond un opérateur 111, 112, 113 ou 114. Pour rendre la figure plus exploitable, on a hachuré les lignes de service réservées aux ordres et adresses. Les quatre pages mémoire 111, 112, 113 et 114 sont connectées par des lignes 41, 51, 61, 42, 52, 62, 43, 53, 63, et 44, 54, 64 à leurs opérateurs respectifs comme la mémoire 10 à la figure 4. Elles participent avec l'ensemble 115, 1150 à la constitution d'une mémoire intelligente 1000 à quatre pages. On profite du temps de transit de chaque opérateur pour adresser et fournir un mot des données Ai aux autres opérateurs successifs.

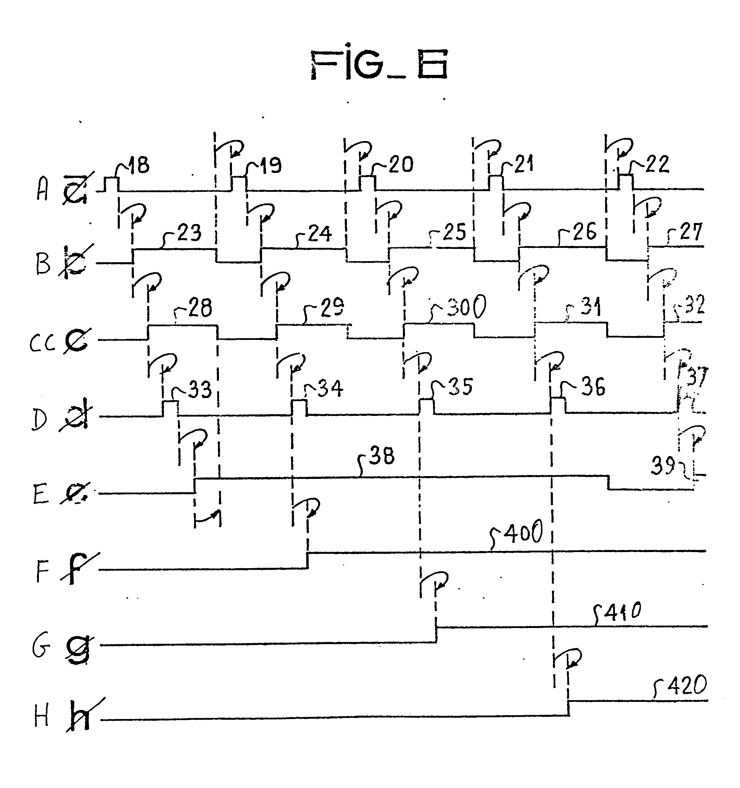

Le mode de fonctionnement préféré du système représenté à la figure 5 est un traitement récursif. Ce mode sera mieux compris à l'aide du chronogramme de la figure 6.

Le système selon l'invention comporte en fait deux ensembles:

— un premier ensemble comprenant l'organe d'acquisition de données 7, l'unité centrale 8, l'organe de contrôle 9,
— un second ensemble constitué par la mémoire intelligente 1000.

Cette dernière comporte trois lignes de service unidirectionnelles: la ligne 2 et les lignes 13 et 14 qui permettent seulement l'envoi des données A1 e A2 de traitement et les adresses mémoires.

Dans l'exemple de réalisation décrit ici, la ligne 13—14 doit envoyer une seule fois des ordres pour initialiser le traitement. Dans le cas particulier de la reconstruction de l'image tomodensitométrique, tous ces mots de données $b_1$ sont nuls. L'unité centrale 8, par le biais de l'ensemble 15, 150 doit alors seulement émettre la commande RAZ de remise à zéro ou RAU de remise à un générale selon le type de mémoire utilisé.

Le chronogramme de la figure 6, comporte 8 diagrammes qui représentent l'état des fonctions:

| | |
|---|---|
| génération d'adresses: | diagramme A, |
| génération de A2: | diagramme B, |
| génération de A1: | diagramme CC, |
| génération du mot de commande C: | diagramme D, |
| opération sur 111: | diagramme E, |
| opération sur 112: | diagramme F, |
| opération sur 113: | diagramme G, |
| opération sur 114: | diagramme H. |

L'unité centrale 8 génèrale l'ordre d'initialisation de la mémoire intelligente 1000. Dans le même temps, la première adresse relative à la première donnée A2 est émise par 15, 150 sur la ligne 13, 14, pendant le créneau 18 du diagramme A. A un temps de commutation près, la mémoire 1000, sélectionnée à sa page 110 présente le mot de la donnée A2 sur l'entrée E2 de l'opérateur 111 par les lignes 41 et 61. Pendant que le premier mot de donnée $b_1$ de la donnée A2 est présenté, le registre 16 émet sur la ligne 2 le premier mot de donnée $a_1$ de la donnée A1 relatif à l'adresse considérée (diagramme CC).

Ces deux opérations sont réalisées pendant les créneaux 23 du diagramme B et 28 du diagramme CC. Ceux-ci sont convenablement maintenus pour être pris en compte par l'opérateur 111. Celui-ci reçoit (diagramme D) pendant ce temps de maintien le mot de commande C qui lui correspond. Ce mot peut comporter plusieurs éléments binaires variables en fonction de la nature de l'opération, de l'étage du traitement récurrent, etc. Cette opération est représentée au créneau 33 du diagramme D.

Le mot de commande C, déclenche le déroulement de l'opération sur l'opérateur 111 (créneau 38 du diagramme E). Pendant la durée de ce créneau, il est possible d'adresser un certain nombre d'autres pages mémoires. Dans l'exemple décrit il en existe trois autres 120, 130, et 140. Leur nombre dépend de la lenteur relative de l'opérateur utilisé. Mais tout se passe pour l'ordinateur pilote comme s'il n'avait qu'un adressage à cadence accélérée.

Après la montée du créneau 38, il faut disposer d'un temps de relaxation. Puis, une seconde adresse relative à une autre donnée à traiter par la seconde page 120 est émise (créneau 19 du diagramme A) et valide la page 120. La même séquence est lancée que celle décrite précédemment. Il s'agit des créneaux 24, 29, 34 et 400 des diagrammes B, CC, D et F. Pendant tout ce temps l'opérateur 111 de la page 110 continue son travail. Enfin successivement la troisième page 130 (créneaux 20, 25, 300, 35 et 410 des diagrammes A, B, CC, D et G) et la quatrième page 140 (créneaux 21, 26, 31, 36 et 420 des diagrammes A, B, CC, D et H) sont adressées et validées par l'ensemble 115, 1150. Le premier cycle ou cycle de départ du traitement récursif en entrelacement est terminé. Le second cycle, après un temps de maintien, peut commencer.

Pour fonctionner comme décrit ci-dessus, la mémoire intelligente 1000 doit comporter des moyens non représentés de compter les données A1 de traitement qui lui parviennent. Dans l'exemple décrit, l'ensemble 115, 1150 peut remplir ce rôle. Il doit comporter un compteur par quatre qui répatit les données aux différentes pages selon le cycle décrit. De plus, il doit aussi comporter un compteur par p si le traitement récursif comporte p étages à chaque adresse. La mémoire 1150 comporte ainsi des séquences d'adresses mémoire en relation d'une part avec le cycle d'entrelacement des pages mémoires, d'autre part avec la repartition des données A1 qui parviennent à la mémoire 100 en provenance du regisre 16 via la ligne 2. C'est ce flux même de données qui cadence l'ensemble 115, 1150.

Au second cycle, une nouvelle fonction rentre en jeu. Il s'agit de la fonction écriture en mémoire du résultat de l'étape précédente à la même adresse et sa lecture pour le présenter en tant que nouvelle donnée A2 (principe du traitement récursif). Sur le diagramme A, le créneau 22 permet d'adresser la page 110 et de valider la première adresse du traitement. Entre la fin du créneau 38 (diagramme E) et le début du créneau 27 (diagramme B), le résultat en sortie de l'opérateur 111 est acheminé à l'adresse convenable de la page 110 via la ligne 61 puis au créneau 27, ce résultat est présenté à l'entrée E2 en tant que mot de donnée b2 de la donnée A2. A cette date, la première adresse e la mémoire 1000 a été choisie et modifée seule. Le mot de donnée a2 de la donnée A1 ayant été présentée au créneau 32 (diagramme CC), la commande au créneau 37 déclenche la seconde opération sur l'opérateur 111 (créneau 39).

Le traitement en entrelacement se poursuit. Au $p^{ième}$ et dernier cycle de traitement seules quatre adresses mémoires ont été convenablement traitées. Aucune des autres n'a encore été modifiée. L'ensemble 115, 1150 peut alors émettre une nouvelle série de quatre adresses mémoire pour poursuivre le traitement.

Enfin, quand toutes les adresses ont été traitées, la mémoire 1000 comporte dans l'exemple décrit l'intégralité de l'image tomodensitométrique reconstruite. L'unité centrale 8, ou tel autre organe convenable, via l'organe de contrôle 9, peut alors commander une lecture séquentielle de la mémoire 1000 aux fins de visualisation selon les normes par télévision.

Les données en mémoire 1000 pourront aussi être transférées sur une unité d'enregistrement comme desdisques souples ou des bandes magnétiques afin de constituer des fichiers. L'unité centrale 8, peut aussi réaliser d'aures traitements ultérieurs par exemple du type traitement graphique comme codage couleur, représentation à trois dimensions, etc.

Selon les technologies employées, le système devra comporter des registres pour presenter chaque valeur aux entrées-sorties des mémoires. Dans l'exemple décrit, on a selement présenté des éléments réalisables dans des technologies électroniques variées. En particulier, la forme du chronogramme de la figure 6, peut changer avec ces technologies.

D'une manière plus générale, le processurs de traitement des données peut nécessiter un nombre différents d'opérations. Un organe de traitement peut alors être constitué par exemple par un système à microprogramme. L'organe de traitement est donc un opérateur 1 complexe.

Enfin, quand le traitement comporte un traitement de peu de données, la mémoire peut être remplacée par les registres internes de l'UAL de l'unité centrale.

Selon l'invention, à titre indicatif on peut avoir à traiter 8192 données par A1 et $512 \times 512$ pour A2 et R dans le cas de reconstruction d'images tomodensitométriques de haute définition. Pour chacune des valeurs, la durée élémentaire est égale à un nombre important de cycles élémentaires.

## Revendication

Système de traitement et de mémorisation de données tomodensitométriques comprenant

— une unité centrale (8) pour recevoir des données depuis un organe d'entrée (7) par le canal d'une première ligne de service (17), pour entreprendre avec ces données dans une unité (1) arithmétique et logique un calcul de reconstruction d'image tomodensitométrique sous le contrôle d'un premier séquencer de microprogramme et pour délivrer des résultats successifs,

— une mémoire (100) pour recevoir ces résultats par le canal d'une deuxième ligne de service (2),

— cette mémoire comporant un opérateur (101) supplémentaire décentralisé de l'unité centrale pour achever sous le contrôle d'un deuxième séquenceur de microprogramme (115, 1150), le calcul de reconstruction d'image de manière à diminuer pour l'unité centrale le nombre d'opérations lecture/écriture en mémoire,

— ledit deuxième séquencer de microprogramme étant initialisé par l'unité centrale et travaillant ensuite au rythme de l'arrivée des résultats successifs,

— ledit opérateur décentralisé étant un additioneur pour exécuter une accumulation dans la mémoire desdits résultats successifs, caractérisé en ce que la mémoire (1000) comporte une pluralité de pages (110, 120, 130, 140) associées chacune à un opérateur décentralisé (111, 112, 113, 114) pour mener à bien un calcul de reconstruction d'image en entrelacement des résultats successifs, le mode d'adressage des cases mémoires s'effectuant, sous le contrôle du deuxième séquenceur de microprogramme, d'une case mémoire d'une page à une case mémoire d'une page suivante.

**Patentanspruch**

Verarbeitungs- und Speichersystem für Tomodensitometrie-Daten, enthaltend

— eine Zentraleinheit (8) zur Entgegennahme der Daten von einem Eingangsorgan (7) über den Kanal einer ersten Betriebsleitung (17), um mit diesen Daten in einer arithmetisch-logischen Einheit (1) eine Berechnung zur Rekonstruktion eines tomodensitometrischen Bildes durchzuführen unter der Steuerung durch eine erste Mikroprogramm-Ablaufsteuerung, zur Ausgabe der aufeinanderfolgenden Ergebnisse,

— einen Speicher (100) zum Entgegennehmen dieser Resultate über den Kanal einer zweiten Betriebsleitung (2),

— wobei dieser Speicher einen zusätzlichen Operator (101) umfaßt, welcher von der Zentraleinheit dezentralisiert ist, um unter der Steuerung einer zweiten Mikroprogramm-Ablaufsteuerung (15, 150) die Berechnung zur Bildrekonstruktion fertigzustellen, so daß für die Zentraleinheit die Anzahl von Lese/Schreib-Operationen im Speicher vermindert wird,

— wobei die zweite Mikroprogramm-Ablaufsteuerung durch die Zentraleinheit initialisiert wird und anschließend im Rhythmus der Ankunft der aufeinanderfolgenden Ergebnisse arbeitet,

— wobei der dezentralisierte Operator ein Addierer ist, um eine Kumulierung der genannten aufeinanderfolgenden Ergebnisse in dem Speicher durchzuführen, dadurch gekennzeichnet, daß der Speicher (1000) eine Mehrzahl von Seiten (110, 120, 130, 140) umfaßt, die jeweils einem dezentralisierten Operator (111, 112, 113, 114) zugeordnet sind, um eine Bildrekonstruktions-Berechnung unter Verschachtelung der aufeinanderfolgenden Ergebnisse zweckmäßig abzuwickeln, wobei die Adressierung der Speicherfelder unter der Steuerung durch die zweite Mikroprogramm-Ablaufsteuerung von einem Speicherfeld einer Seite zu einem Speicherfeld einer darauffolgenden Seite erfolgt.

**Claim**

System for processing and storing tomodensitometric data, comprising

— a central unit (8) for receiving data from an input member (7) via the channel of a first service line (17) for carrying out with said data in an arithmetic and logic unit (1) a calculation for reconstructing the tomodensitometric image under the control of a first microprogram sequencer and for delivering successive results,

— a memory (100) for receiving said results via the channel of a second service line (2),

— said memory comprising and additional operator (101) decentralized from the central unit for completing under the control of a second microprogram sequencer (115, 1150) the calculation for image reconstruction so as to diminish for the central unit the number of read/write operations in the memory,

— said second microprogram sequencer being initialized by the central unit and thereafter working in the rhythm of the arrival of the successive results,

— the decentralized operator being and adder for performing an accumulation in the memory of said successive results, characterized in that the memory (1000) comprises a plurality of pages (110, 120, 130, 140) each associated with a decentralized operator (111, 112, 113, 114) for successfully performing an image reconstruction calculation with nesting of the successive results, the addressing of the memory fields taking place under the control of the second microprogram sequencer from a memory field of a page to a memory field of a following page.

0 043 745

FIG_1

FIG_2

FIG_3

# FIG_4

0 043 745

FIG._5

# FIG_6